# EUROPEAN PATENT SPECIFICATION

(11) **EP 0 262 987 B1**
(45) Date of publication and mention of the grant of the patent: **24.01.1996**
(21) Application number: 87308778.7
(22) Date of filing: 02.10.1987
(51) Int. Cl.: C08F 4/64, C08F 4/68, C08F 210/16

(54) **Catalysts for the preparation of elastomeric, olefin copolymers, and copolymers obtained using them**
Katalysatoren für die Herstellung elastomerer Olefincopolymere und damit hergestellte Copolymere
Catalyseurs pour la préparation de copolymères élastomériques d'oléfines et copolymères obtenus en les utilisant

(30) Priority: 02.10.1986 IT 2187286
(43) Date of publication of application: 06.04.1988
(73) Proprietor: SPHERILENE S.p.A., I-20121 Milano (IT)
(72) Inventor: Cuffiani, Illaro, I-44100 Ferrara (IT); Fabbri, Roberto, I-44039 Tresigallo Ferrara (IT); Margelli, Francesco G., I-45030 Occhiobello Roma (IT); Zucchini, Umberto, I-44100 Ferrara (IT)
(74) Representative: Whalley, Kevin

(56) References cited:
- EP-A- 0 043 185
- EP-A- 0 096 770
- EP-A- 0 114 526
- EP-A- 0 171 606
- DE-A- 2 626 097
- FR-A- 2 111 137

## Description

The present invention relates to a catalytic process for the preparation of copolymers of ethylene and/or alpha-olefins, and optionally dienes and to the preparation of catalyst components therefor. The present invention is also concerned with catalyst components for the catalytic process and to the catalysts used in a catalytic process. In particular, the present invention is concerned with the use of the catalyst components in the preparation of substantially amorphous, saturated copolymers of ethylene and/or alpha-olefins and substantially amorphous, unsaturated copolymers of ethylene and/or alpha-olefins and conjugated or non-conjugated dienes.

More especially, the present invention is concerned with catalysts comprising the catalytic components and to the use of such catalysts in the copolymerization of ethylene with propylene, or with propylene and butadiene or non-conjugated dienes, and the cured articles obtained from them which have improved tension set values.

The copolymerization of ethylene and alpha-olefins, in the presence or absence of diolefins, has been carried out with various types of catalysts: one of the most used of such catalysts comprising the reaction product of a vanadium compound with an organometallic compound of a metal of Group I, II or II of the Periodic System (see GB-A-1, 277, 629; IT-A-890, 604; GB-A-1,277,353; IT-A-879,026; and GB-A-1,519,472). The copolymers obtained with this catalyst are completely or substantially amorphous. The activity of these catalysts, and, consequently, the yield of polymers with reference to the amount of catalyst employed, is anyway relatively low.

We have disclosed high activity catalysts for preparing saturated or unsaturated ethylene-propylene elastomers, in prior patent specifications, e.g.: FR-A-2,111,137; U.S.-A-4,013,823; and Italian Patent Application 20,386 A/85.

The therein disclosed catalysts make it possible, thanks to their high activity, to produce saturated or unsaturated olefinic elastomers, using a simplified and considerably less expensive process which does not comprise any steps for the purification of the polymer obtained from the catalytic residues.

EP-A-096770 discloses a process for producing olefin polymers, in which at least one olefin is polymerised in the presence of a catalytic system comprising a solid catalyst component obtained by the contact reaction between a magnesium alkoxy aralkoxy or aryloxy compound, a compound of tetravalent titanium and an organoaluminium compound as an activating agent.

EP-A-0171606 discloses a polyolefin polymerization process and catalyst. The catalyst is prepared by reacting a dihalide such as MgCl₂, a titanium compound and an electron donor compound to form a first component, which is reacted with an organo aluminium halide, then TiCl₄ and finally HSiCl₃.

EP-A-043185 discloses a titanium halide catalyst system. The titanium halide component for use in the catalyst system is obtained by reacting a magnesium compound with an electron donor compound. The product ia reacted with an organic phosphite to produce a reaction product which is reacted with a tetravalent titanium halide.

We have now found catalytic systems which, besides having high catalytic activities, are capable of producing olefinic elastomers having appreciably improved elastic properties, in particular as regards the values of tension set of the corresponding cured products.

The present invention provides a process for preparing elastomeric copolymers of ethylene with alpha-olefins of formula R-CH=CH₂ wherein R is a C₁-C₆ alkyl, optionally with conjugated or non-conjugated dienes, which comprises copolymerizing said monomers in the presence of a catalytic amount of a catalyst comprising:
(I) a catalyst component which comprises:
   (A) a magnesium compound containing at least one Mg-halogen bond;
   (B) a halogenated compound of Ti containing metal-oxygen Ti-OR bonds (wherein R is a C₁-C₂₀ alkyl, aryl or cycloalkyl group), wherein the Ti is at least partially trivalent; and
   (C) an electron-donor compound containing one or more oxygen, silicon and/or phosphorus atoms and which is an ether or an organic or inorganic ester;
      the atomic ratio of magnesium to titanium being from 0. 2:1 to 50:1;
      the atomic ratio of halogen to titanium being at least 2: 1;
      the atomic ratio of halogen to magnesium being at least 2: 1; and
      the ratio of -OR groups to titanium atoms being not more than 1. 5: 1; and
(II) an Al-alkyl compound.

The catalytic components of the present invention can be prepared by various methods, preferably operating under such conditions that the magnesium compound is at least partially dissolved in one of the reactants used.

The invention also provides a process for preparing a catalyst component of the type (I) defined in Claim 1, for use in the preparation of elastomeric copolymers of ethylene with alpha-olefins of formula R-CH=CH₂ wherein R is a C₁-C₆ alkyl, optionally with conjugated or non-conjugated dienes, which comprises reacting together:
(1)an anhydrous magnesium halide or a compound of the formula XMgOR₁, wherein X is halogen or a -R₁ or -OR₁ group, and R₁ has the meaning defined in Claim 1;
(2) a compound of formula [TiOₓ (OR₁)_{y}]ₙ or Ti(acetyl-acetonate)₃, wherein:
   R₁ has the meaning defined in Claim 1;
   x is 0 or an integer, y is an integer of zero or more and 2x + y is the valence of the Ti; and
   n is an integer of from 1 to 6 inclusive;
(3)a halogenated compound, capable of replacing at least one -OR₁ group in component (2) with a halogen atom;
(4)an electron-donor compound containing one or more oxygen, silicon and/or phosphorus atoms, and comprising an ether or an organic or inorganic ester; and
(5)a reducing compound capable of at least partially reducing the titanium of component (2) to the trivalent state.

The invention also provides a process for preparing a catalyst component of the type (I) defined in Claim 1, for use in the preparation of elastomeric copolymers of ethylene with alpha-olefins of formula R-CH=CH₂ wherein R is a C₁-C₆ alkyl, optionally with conjugated or non-conjugated dienes, which comprises reacting together:
(1)an anhydrous magnesium halide or a compound of the formula XMgOR₁, wherein X is halogen or a -R₁ or -OR₁ group, and R₁ has the meaning defined in Claim 1;
(2) a compound of formula [TiOₓ (OR₁)_{y}]ₙ or Ti (acetyl-acetonate)₃, wherein:
   R₁ has the meaning defined in Claim 1;
   x is 0 or an integer, y is an integer of zero or more and 2x + y is the valence of the Ti; and
   n is an integer of from 1 to 6 inclusive;
(3)a halogenated compound, capable of replacing at least one -OR₁ group in component (2) with a halogen atom, and capable of at least partially reducing the titanium of component (2) to the trivalent state; and
(4)an electron-donor compound containing one or more oxygen, silicon and/or phosphorus atoms, and comprising an ether or an organic or inorganic ester.

Examples of preferred compounds (2) are:
Ti (OC₂H₅)₄,
Ti (0-n-C₄H₉)₄,
Ti (0-i-C₃H₇)₄,
Ti(0C₆H₅)₄,
and
Ti-triacetylacetonate.

The compound (3) may, for example, be Al-alkyl halide such as Al-Et₂C1₂ or Al-EtC1₂; an Al-alkyl sesquihalide; an organic acid halide R¹COX (in which X is halogen, preferably chlorine, and R¹ is an aliphatic or aromatic organic radical); hydrogen halides (such as HC1); SOCl₂; TiCl₄; BCl₃; and others. Particularly interesting results are achieved when Al-alkyl halides (such as AlEtCl₂), Al-alkyl sesquihalides, or halogen-containing, or halogen and hydrogen-containing, silicon compounds are used. These latter, besides acting as halogenating agents, also perform the function of reducers. As examples of such silicon compounds there can be mentioned silicon halides of the formula SiX₄₋ₘYₘ (wherein X and Y are each halogen atoms (such as, Cl or Br, and m is a number ranging from zero to 3 inclusive), such as SiCl₄; chlorosiloxanes of the formula Siₙ0ₙ₋₁Cl₂ₙ₊₂, (wherein n is a number ranging from 2 to 7 inclusive), such as, for example, Si₂OCl₆; halogenated polysiloxanes of the formula SiₙXₙ₊₂, (wherein X is halogen and n is a number ranging from 2 to 6 inclusive), such as Si₄Cl₁₀; halosilanes of the formula SiH₄₋ₙXₙ, (wherein X is a halogen and n is a number from 1 to 3 inclusive), such as SiHCl₃; alkyl-halosilanes of the formula R'ₙSiHₓV_{y} (wherein R¹ is an aliphatic or aromatic radical, X is halogen, n is anumber from 1 to 3 inclusive, x is a number from 0 to 2 inclusive, and y is a number from 1 to 3 inclusive), such as CH₂H₅SiCl₃, CH₃SiCl₂H, (CH₃)₂SiCl₂; alkoxysilanes of the formula Si(OR)₄ₙXₙ (wherein X is halogen, R is alkyl or C₁ -C₂₀ alkyl or aryl, and n is a number ranging from 1 to 3 inclusive) such as Si(OC₂H₅)Cl₃.

Examples of electron-donor compounds (4) are: dialkyl-ethers or aryl-alkyl-ethers, in particular di-n-butyl-ether, diisopropyl-ether, diisoamyl-ether, anisole, dimethylglycol-ether (CH₃-O-CH₂-CH₂-O-CH₃), and diethyl-polyoxyethylene-glycol-ethers. [C₂H₅-O-[-CH₂-CH₂-O-]ₙ-C₂H₅]; organic aliphatic, cycloaliphatic and aromatic esters, in particular ethyl acetate, vinyl acetate, cyclohexyl acetate, methyl p-toluate, ethyl p-anisate and benzyl benzoate; and inorganic esters, in particular ethyl orthosilicate, diphenyl-dimethoxy-silane, dimethyl-diethoxy-silane, dichloro-dimethoxy-silane, tributyl-phosphate and triphenyl-phosphite.

The reaction conditions and the ratios between reactants (1), (2), (3) and (4) are so selected that in the catalytic component the ratios of magnesium to titanium, halogen to titanium, halogen to magnesium and -OR₁ groups to titanium are within the ranges defined above.

If components (1) and (2) are reacted with a compound (3) capable of only carrying out a halogenating action, it is necessary to also use a reducing compound (5) which is capable of at least partially reducing, to the trivalent state, the titanium metal present in component (2).

Silicon compounds which can be used as reducing agents are silanes SiₙH₂ₙ₊₂ (wherein n is 1 or more, preferably 3 or more) such as Si₃H₈; alkyl- or aryl-silanes RₓSiH₄₋ₓ, (wherein R is alkyl or aryl, and x is a number ranging from 1 to 3 inclusive) such as (C₆H₅)₃SiH; alkoxy- or aryloxy-silanes (RO)ₓSiH₄₋ₓ (wherein R is an alkyl or aryl, and x is a number ranging from 1 to 3 inclusive) such as (C₂H₅O)₃SiH: and polyalkyl-hydro - siloxanes of the formula: 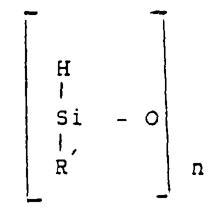 (wherein R is a C₁-C₁₀ alkyl radical or an aryl, alkoxy or aryloxy radical and n is a number lower than 10.000, generally from 3 to 100).

In order to prepare the catalytic components of the invention, components (1), (2), (3) and (4) can be reacted either in an aliphatic or aromatic hdyrocarbon diluent, when at least one of the reactants is soluble in such a diluent, or in the absence of a diluent, when at least one of the reactants is in the liquid state at reaction pressure and temperature.

Preferably, after reacting components (1) and (2) until a homogeneous product is obtained, this latter is reacted with components (3) and (4). According to an alternative method, which gives very good results, the product from the reaction between components (1), (2) and (3) is subsequently treated with component (4), optionally in the presence of aromatic, aliphatic or cycloaliphatic hydrocarbon solvents.

The above reactions are suitably carried out at temperatures of from -10°C to 250°C, preferably of from 20°C to 200°C, the temperature also being selected as a function of the nature of components (3) and (4).

The components (1) and (2) are used in such amounts as to have an Mg/transition metal atomic ratio of from 0. 2: 1 to 50:1, preferably of from 0.5:1 to 5:1, whilst the component (3) is used in the amount of at least 2, and preferably 4-10, gram-atoms of halogen per gram-atom of transition metal, and of from 0.1 to 100, preferably 0.5 to 20, gram-equivalents of reducer compound per gram-atom of the transition metal.

The electron-donor compound (4) is used in such an amount as to have an electron donor/Mg molar ratio in the range of from 0.01:1 to 10:1, and preferably of from 0.1:1 1 to 1:1.

### Second Preparation Method

The present invention further provides a process for preparing a catalyst component of the type defined in Claim 1, for use in the preparation of elastomeric copolymers of ethylene with alpha-olefins of formula R-CH=CH₂ wherein R is a C₁-C₆ alkyl, optionally with conjugated or non-conjugated dienes, which comprises reacting together
(I) a Ti compound, wherein the Ti is at least partially trivalent, containing Ti OR₁ bonds, (wherein R₁ has the meaning defined in Claim 1);
(I) a complex of the formula:

   MX₂. n(AlR"X₂).pAlX₃

   wherein:
   - M: is Ba, Ca, Mg or Mn;
   - X: is chlorine or bromine;
   - R": is a C₁ -C₂₀ hydrocarbyl radical;
   - n: is a number from 1 to 4 inclusive;
   - p: is 0 or 1; and
   - n + p: is a number from 1 to 4 inclusive; and
(III) an electron-donor compound, containing one or more oxygen, silicon and/or phosphorus atoms and comprising an ether or an organic or inorganic ester.

Representative examples of compounds I are:
Ti(O-n-C₃H₇)₄; Ti(O-n-C₄H₉)₄;
Ti (OC₆H₅)₄ and polyoxyalkyleneglycol orthotitanates.

Representative examples of components (II) are:
MgCl₂ . 2AlC₂H₅Cl₂;
MgCl₂ . 2.5Al -i-(C₄H₉)C₂;
MgCl₂ . 1.5Al-n-C₄H₉Cl₂;
CaCl₂ . 4AlC₂H₅Cl₂;
BaCl₂ . AlCl₃ . AlC₂H₅Cl₂.

The reaction between components (I), (II) and (III) can be carried out in various ways and the process is carried out to give appropriate Mg/Ti, halogen/Ti, halogen/Mg and -OR₁/Ti ratios. The preferred method consists in reacting the mixture of the reactants in an Mg/transition metal atomic ratio of from 1:1 to 10: 1, at a temperature of from 0°C to 150°C, or even lower than 0°C, but preferably from 20°C to 140°C; and in separating the solid reaction product from the liquid phase.

The reaction may be carried out in a hydrocarbon diluent, such as n-hexane, n-heptane, cyclohexane or toluene; alternatively component (II) can be submitted to an atomization treatment in the presence of components (I) and (III).

In any case, component (III) is used in such an amount as to have an electron donor/Mg molar ratio of from 0.01 to 10:1, preferably from 0.01 to 1:1.

A particular advantage of the catalysts of the invention consists in that component (II) can be dissolved in an excess of the Al-alkyl dihalide, and an inert support can be impregnated with such solution, which support can already contain the transition metal compound and the electron-donor compound, or these latter can be added to the support at a latter time.

Particularly suitable supports are Al₂O₃ and SiO₂ having high surface areas and a pore volume greater than 0.3 cc/g, TiO₂. ZrO₂, or polymers.

The solid catalytic components of the invention in combination with aluminum organometallic compounds, preferably Al-trialkyls, yield catalysts capable of giving elastomeric copolymers of ethylene and/or alpha-olefins of formula R-CH=CH₂ (in which R is C₁-C₆ alkyl), optionally with conjugated or non-conjugated dienes, which copolymers have low tension set values.

The preferred alpha-olephin, for use in combination with ethylene, is propylene: and there may be used as dienes, 1,3-butadiene, 10-methyl-1,9-undecadiene, 1,9-decadiene, or 5-ethylidene-2-norbornene; especially 1,3-butadiene or 5-ethylidene-2-norbornene.

Representative examples of aluminum organometallic compounds to be used as co-catalysts together with the solid catalytic components of the present invention, are the following:
Al(C₂H₅)₃,
Al(i-C₄H₉)₃,
Al (n-C₈H₁₇) ₃,
Al(i-C₄H₉)₂H,
Al(i-C₄H₉)H₂.

The molar ratio of such compounds to the transition metal compound exceeds 1:1, and is generally from 1:1 to 100:1.

The copolymerization of ethylene.and/or alpha-olefins, optionally with dienes, is carried out according to known methods, by operating in the presence of an inert hydrocarbon vehicle capable of dissolving the polymer, or in the absence of such solvent. The polymerization is preferably carried out in the presence of liquid propylene as the polymerization vehicle. In this case, the reaction is suitably carried out at a temperature of from 0°C to 60°C. In a continuous process, excess monomer is flashed off from polymer obtained, and is then recycled; due to the high activity of the catalysts of the present invention, it is not necessary to submit the recovered polymer to purification treatment to remove catalytic residues.

In order that the invention may be well understood the following Examples are given by way of illustration only. In the examples all parts and percentages are by weight unless otherwise stated.

### Comparative Example

### Preparation of Catalysts Component "AO"

To a 100-cm three-necked glass flask, equipped with stirring means, 4.75 g of anhydrous MgCl₂ and 39 g of AlEtCl₂ were charged under a dry nitrogen atmosphere. The mixture was heated, with stirring, to 120°C and maintained at this temperature for 3 hours until the MgCl₂ had completly dissolved. In another flask, of 250 cm³ capacity, a solution of Ti(O-n-Bu)₄ (25.5 g) in 50 ml of anhydrous n-hexane, was separately prepared.

The solution of MgCl₂ in AlEtCl₂, maintained fluid by being heated to approximately 70°C, was fed over a period of 4 hours to the Ti(O-Bu)₄/hexane solution (stirred and cooled to 0°C), and the resulting mixture was then heated for 1 hour at 60°C.

The top phase of the reaction mixture was then removed by means of a siphon the catalytic solid thus obtained was then repeatedly washed at room temperature with anhydrous n-hexane until the washing solvent was free from chloride ions. The catalytic solid was finally dried for 3 hours under vacuum at 40°C. The product had the following analysis:
Ti = 15.7%; Mg = 4.5%; Al = 2.85%; Cl = 50.5% OBu = 9.6%.

### Preparation of Catalyst Component "Al"

In a glass flask of 100 cm³ capacity, equipped with a stirrer, 4.75 of anhydrous MgCl₂ and 38 g of AlEtCl₂ were reacted by heating at 120°C for 3 hours until complete dissolution of MgCl₂ occurred. The resultant solution, maintained at 70°C, was then added dropwise, over a period of 4 hours, to a stirred 250 cm³ flask, containing 25.5 g of Ti(O-n-Bu)₄ and 4.05 g of anisole in 50 cm³ of hexane and maintained at 0°C.

At the end of the addition, the mixture was heated to 60°C and maintained for 1 hour at this temperature. The solid formed was then filtered off and was repeatedly washed with hexane; finally, it was dried under vacuum at 40°C for 3 hours. The product had the following analysis.
Ti = 18.15%; Mg = 6.05%; Al = 0.72%; Cl = 50.3% OBu = 10.6%. anisole = 3.5%.

### Preparation of Catalyst Component A2"

The procedure for the preparation of catalyst component "Al" was repeated except that di-isamyl-ether (5.94 g) was used instead of the anisole. The final product, dried under vacuum at 40°C for 3 hours, had the following analysis:
Ti = 18.3%; Mg = 6.1%; Al = 0.8%; Cl = 47.7% OBu = 13.1%.

### Preparation of Catalyst Component "A3"

The procedure for the preparation of Catalyst Component "Al" was repeated using n-butyl ether (4.89g) instead of the anisole.

The product had the following analysis:
Ti = 19.1%; Mg = 5.7%; Al = 0.5%; Cl = 50.2% OBU = 14.1%; n-butyl ether = 6.0%.

### Preparation of Catalyst Component "A4"

The procedure for the preparation of catalyst component "Al", was repeated, using ethyl acetate (4.05 g) instead of anisole.

The product had the following analysis:
Ti = 17.4%; Mg = 5.5%; Al = 0.6%; Cl = 48.6% OBu = 11.8%

### Preparation of Catalysts Component "A5"

The procedure for the preparation of catalyst Component "Al" was repeated, the anisole being replaced by methyl-p-toluate (MPT) (5.62 g).

The product had the following analysis:
Ti = 12.7%; Mg = 3.8%; Al = 2.5%; Cl = 38.35% OBu = 17%; MPT = 19.5.

### Preparation of Catalyst Component "A6"

The procedure for the prearation of Catalyst Component Al was repeated using tributyl-phosphate (9.9g) instead of anisole.

The product had the following analysis:
Ti = 16.8%; Mg = 4.4%; Al = 0.95%; Cl = 41.5% OBu = 18.3%.

### Preparation of Catalysts Component "A7"

10 g of Catalyst Component A0 was charged into a 250 cm³ glass flask equipped with a mechanical stirrer.

At room temperature, 50 cm³ of anhydrous toluene and 14.7 g of anisole were added to the contents of the flask and the resulting suspension, heated to 80°C, was stirred for 2 hours.

After decanting the solids, the liquid phase was removed at room temperature. The residue was then washed 4 times, each time with 50 cm³ of anhydrous hexane at room temperature, and was finally dried under vacuum at 40°C for 3 hours.

The product had the following analysis:
Ti = 17.6%; Mg = 5.7%; Al = 0.56%; Cl = 51.5% OBu = 9.2%; anisole = 7.6%.

### Preparation of Catalyst Component "A8"

13.9 g of Catalyst Component AO were suspended in 50 cm³ of anhydrous toluene and 4.52 g of methyl-p-toluate (MPT) were added to the suspension.

The whole mixture was then maintained at 80°C for 2 hours, and was finally washed and dried as described in the preparation of Catalyst Component "A7".

The product had the following analysis:
Ti = 13.5%; Mg = 4.2%; Al = 2.0%; Cl = 42.9% OBu = 4.6%; MPT = 23.8%.

### Preparation of Catalyst Component A9"

To 17.1 g of Catalytic Component AO, suspended in 50 cm³ of anhydrous toluene, were added 2.15 g of dimethoxy diphenyl-silane (DPMS). The resultant suspension, slowly heated to 80°C, was stirred at this temperature for 2 hours.

After washing hexane and drying as decribed for the preparation of catalyst component "A7", the product had the following analysis:
Ti = 17.2%; Mg = 5.2%; Al = 1.9%; Cl = 53.3% OBu = 6.8%; DPMS = 1.7%.

### Preparation of Catalyst Component "A10" (outside the scope of the claims)

To a 250 cm³ flask were charged 3.6 g of MgCl₂ and 27 g of Ti(O-n-Bu)₄. The mixture was heated, with stirring, at 140°C for 5 hours, and the resulting solution was diluted, after cooling, with 53 cm³ of n-heptane.

At 48°C and with stirring, 15 g of polymethylhydrosiloxane was then added over a period of 2 hours, and then 22.5 g of SiCl₄ were added over the following two hours.

The temperature of the reaction mixture was increased to 60°C and it was then stirred for a further 2 hours. The whole mixture was transferred on a filtering septum and was repeatedly washed at room temperature with n-hexane, until chlorine ions disappeared from the washing solvent.

The solid product was dried under vacuum at 40°C for 3 hours and had the following analysis:
Ti = 14.4%; Cl = 38.3%; Mg = 5.8%; OBu = 28.5%

### Preparation of Catalyst Component A11"

13 g of Catalyst Component "A10" were suspended in 50 cm³ of anhydrous toluene and to it were added 8.1 g of anisole. The whole mixture was kept stirred at 80°C for 2 hours and was then finally washed and dried as described for the preparation of Catalyst Component "A7".

The product had the following analysis:
Ti = 13.9%; Mg = 5.9%; Cl = 38.7%; OBu =22.0% anisole = 13.0%.

### Preparation of Catalyst Component "A12"

14g of Catalyst Component "A10", suspended in 50 cm³ of toluene, were treated at 80°C, for 2 hours. with 3.65 g of methyl-p-toluate (MPT), as described for the production of Catalyst Component "A7".

The dry product had the following anaylsis:
Ti = 9.8%; Mg = 5.2%; Cl = 31.4%; OBu =14.8% methyl-p-toluate = 22.6%.

Catalyst components "A", prepared as described above were employed in olefin polymerization processes as described below.

The polymerizations were carried out in stainless steel autoclaves, equipped with stirring means and temperature-control systems.

The volumes of the autoclaves are given in Tables I and II below, together with the operating conditions and the amounts of reactants used in the individual polymerization tests.

To the autoclaves, after a suitable purging, the desired amount of propylene, and, optionally, of diene, was charged.

After heating to the desired temperature, ethylene was added, until the desired pressure was reached.

The required amount of the Catalytic Component "A", suspended in 20 cm³ of anhydrous heptane, also containing aluminum-tributyl (MAB) was charged to the autoclave.

During the polymerization, the pressure was maintained constant by continuously feeding ethylene to the autoclave.

At the end of the polymerization, the catalyst was quenched by injecting 20 cm³ of acetone containing Irganox 1010 in an amount of 0.2% relative to the amount of polymer produced.

After stirring for 5 minutes, the monomers were slowly vented, until ambient pressure and temperature were reached.

The recovered polymer was finally dried at 70°C under a nitrogen stream, and was weighed.

The saturated copolymers were cured at 165°C for 40 minutes, on a platen-press, using the following formulation (previously extruder-homogenised at 80°C for 10 minutes):

| | |
|---|---|
| COPOLYMER | 100 parts |
| FEF CARBON BLACK | 80 parts |
| CORTIS 100M OIL | 30 parts |
| ZnO | 5 parts |
| SULPHUR | 0.4 parts |
| PEROXIMON F40 | 5 parts |

The unsaturated terpolymers were cured on a platen-press at 160°C for 30 minutes, using the following formulation:

| | |
|---|---|
| TERPOLYMER | 100 parts |
| ZnO | 5 parts |
| STEARIC ACID | 1 part |
| FEF CARBON BLACK | 55 parts |
| CORTIS 100M OIL | 30 parts |
| TETRAMETHYLTHIURAM DISULPHIDE | 1.5 parts |
| MERCAPTOBENZOTHIAZOLE | 0.75 parts |
| SULPHUR | 1.5 parts |

The extrusion performance (extrudability) was evaluated for two compounds respectively containing copolymers obtained using Catalyst Components "AO" and "Al". The compositions of the compounds used, and the results obtained, are shown in Table III. A Banbury mixer was used to prepare the compounds.

The extrusion was carried out on a Troester type extruder, having a screw of 90 mm, with a central body temperature of 40°C, and a head temperature of 80°C; the nozzle had an average diameter of 16 mm. The processability of the compounds was expressed as the revolution speed (revolutions per minute) of the screw, necessary to obtain 14 metres/minute of extruded polymer.

The data obtained (Examples 16 and 17, Table III) show that the compound containing the copolymer obtained with Catalyst Component "Al" has better processability characteristics than the compound containing the copolymer obtained with Catalyst Component "AO", because it requires a lower extruder revolution speed, i.e., shorter extrusion times, with the other operating conditions and the amount of extruded polymer being the same.

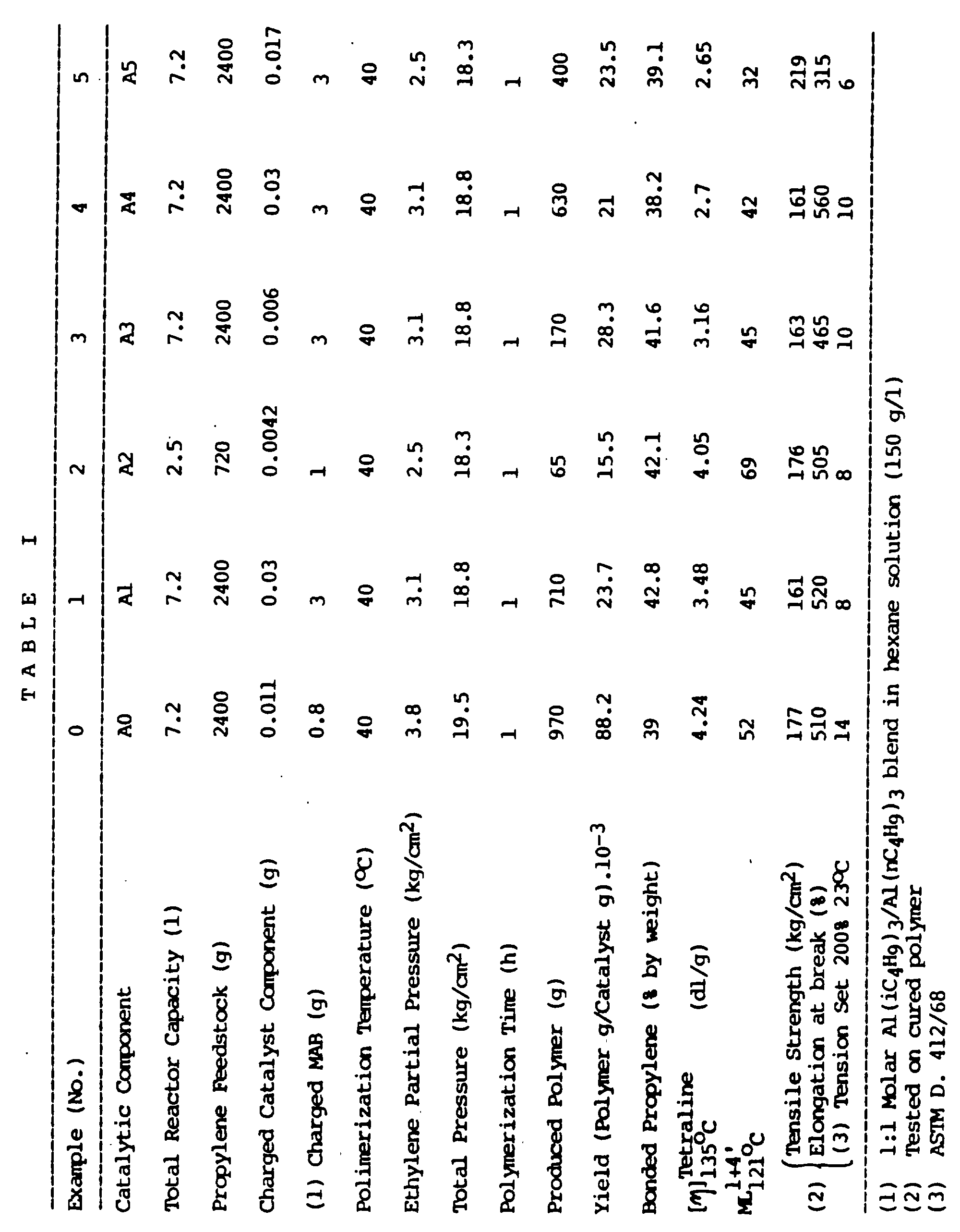

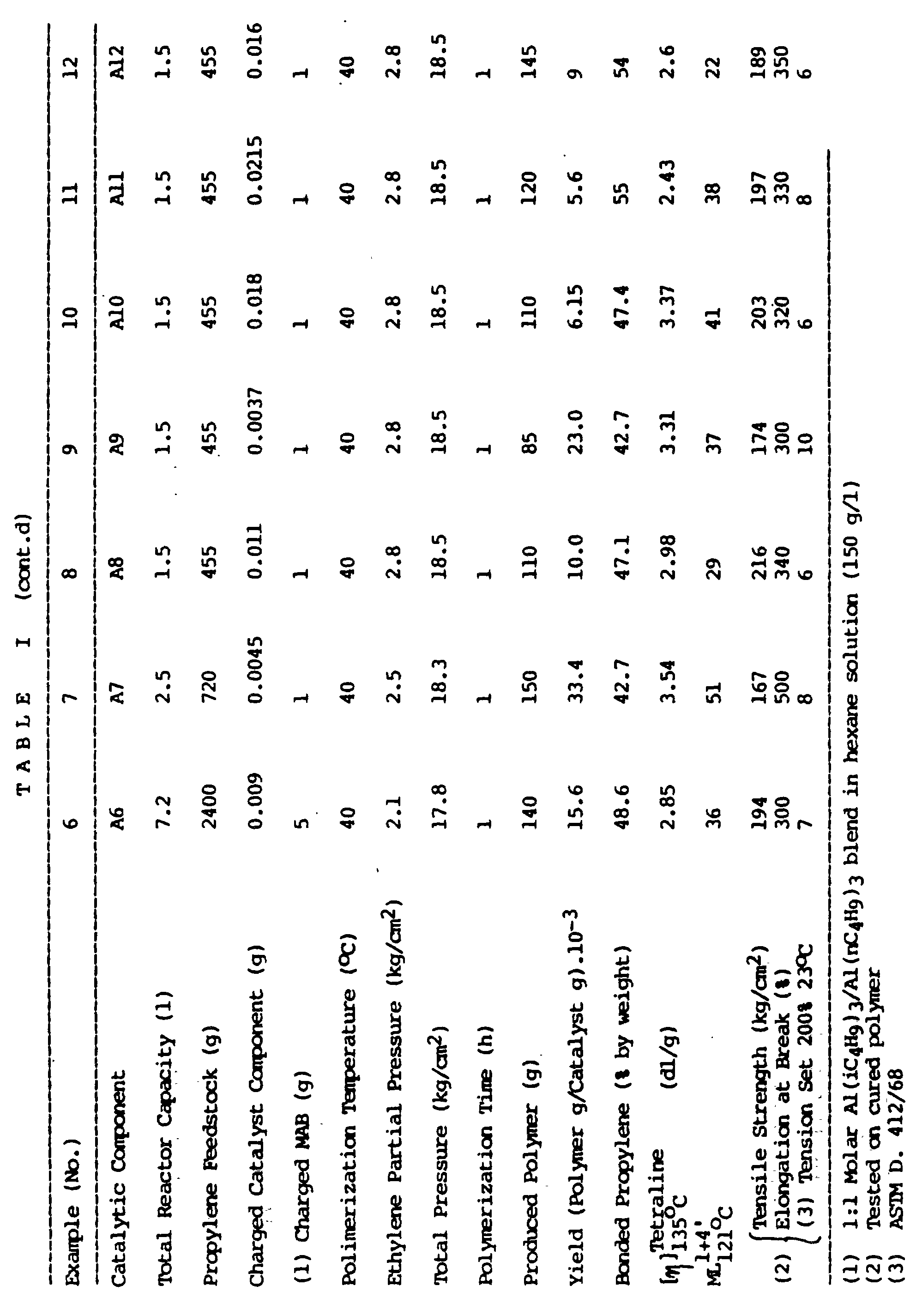

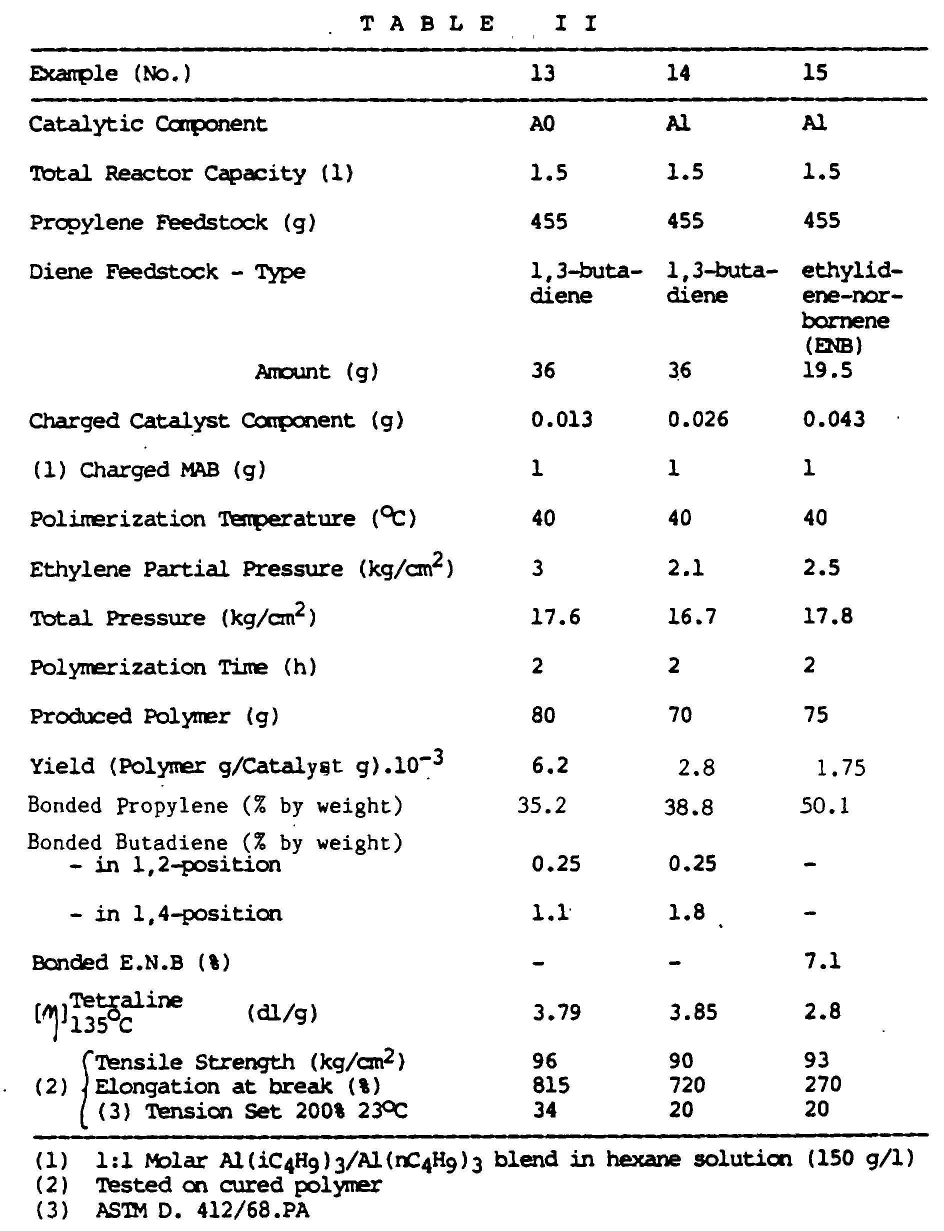

**TABLE III**

| COMPOUND FORMULATION (parts by weight) | Example 16 | Example 17 |
|---|---|---|
| | | |
| Copolymer produced with Component A0 ^{(C3} = 43%: [η] = 2.5 dl/g | 85 | - |
| | | |
| Copolymer produced with Component A1 _{(C3} = 46%: [η] = 2.6 dl/g | - | 85 |
| | | |
| Irganox 1076 | 0.2 | 0.2 |
| | | |
| ZnO | 5 | 5 |
| | | |
| Stearic Acid | 1 | 1 |
| | | |
| Carbowax 4000 | 2.5 | 2.5 |
| | | |
| SRF | 58 | 58 |
| | | |
| HAF | 43 | 43 |
| | | |
| Plastikator 32 | 3 | 3 |
| | | |
| Sinfluid AR 25 | 30 | 30 |
| | | |
| Sulphur | 0.25 | 0.25 |
| | | |
| Caloxol W3 | 6 | 6 |
| | | |
| Peroximon F40 | 3.6 | 3.6 |
| | | |
| Trigonox 29/40 | 1.8 | 1.8 |
| Mooney ML (1+4) 100°C | 52 | 51 |
| Screw Revolution Speed to Produce 14 metres of polymer/minute | 40 | 29 |
| | | |

## Claims

1. A process for preparing elastomeric copolymers of ethylene with alpha-olefins of formula R-CH=CH₂ wherein R is a C₁-C₆ alkyl, optionally with conjugated or non-conjugated dienes, which comprises copolymerizing said monomers in the presence of a catalytic amount of a catalyst comprising:
(I) a catalyst component which comprises:
(A) a magnesium compound containing at least one Mg-halogen bond;
(B) a halogenated compound of Ti containing metal-oxygen Ti -OR₁ bonds (wherein R₁ is a C₁-C₂₀ alkyl, aryl or cycloalkyl group), wherein the Ti is at least partially trivalent; and
(C) an electron-donor compound containing one or more oxygen, silicon and/or phosphorus atoms and which is an ether or an organic or inorganic ester; the atomic ratio of magnesium to titanium being from 0. 2: 1 to 50: 1;
the atomic ratio of halogen to titanium being at least 2:1;
the atomic ratio of halogen to magnesium being at least 2: 1; and
the ratio of -OR₁ groups to titanium atoms being not more than 1. 5: 1; and
(II) an Al-alkyl compound.

2. A process as claimed in Claim 1, characterized in that the atomic ratio of magnesium to titanium is at least 0. 5:1; the atomic ratio of halogen to titanium is from 4 to 10; the atomic ratio of halogen to magnesium is from 4 to 8; and the ratio of -OR₁ groups to titanium atoms is not more than 1: 1.

3. A process as claimed in Claim 1 or Claim 2, characterized in that the ratio of moles of component (C) to magnesium is from 0. 01:1 to 10: 1.

4. A process as claimed in any one of the preceding claims, characterized in that the magnesium compound is an anhydrous magnesium halide or a compound of the formula XMgOR₁, wherein X is halogen or a -R₁ or -OR₁ group, R₁ having the meaning defined in Claim 1.

5. A process as claimed in Claim 4, characterized in that the magnesium compound is magnesium chloride.

6. A process for preparing a catalyst component of the type (I) defined in Claim, 1 for use in the preparation of elastomeric copolymers of ethylene with alpha-olefins of formula R-CH=CH₂ wherein R is a C₁-C₆ alkyl, optionally with conjugated or non-conjugated dienes, which comprises reacting together:
(1)an anhydrous magnesium halide or a compound of the formula XMgOR₁, wherein X is halogen or a -R₁ or -OR₁ group, and R₁ has the meaning defined in Claim 1;
(2) a compound of formula [TiOₓ (OR₁)_{y}]ₙ or Ti (acetyl -acetonate)₃, wherein:
R₁ has the meaning defined in Claim 1;
x is 0 or an integer, y is an integer of zero or more and 2x + y is the valence of the Ti; and
n is an integer of from 1 to 6 inclusive;
(3)a halogenated compound, capable of replacing at least one -OR₁ group in component (2) with a halogen atom;
(4)an electron-donor compound containing one or more oxygen, silicon and/or phosphorus atoms, and comprising an ether or an organic or inorganic ester; and
(5)a reducing compound capable of at least partially reducing the titanium of component (2) to the trivalent state.

7. A process for preparing a catalyst component of the type (I) defined in Claim 1, for use in the preparation of elastomeric copolymers of ethylene with alpha-olefins of formula R-CH=CH₂ wherein R is a C₁-C₆ alkyl, optionally with conjugated or non-conjugated dienes, which comprises reacting together:
(1)an anhydrous magnesium halide or a compound of the formula XMgOR₁, wherein X is halogen or a -R₁ or -OR₁ group, and R₁ has the meaning defined in Claim 1;
(2) a compound of formula [TiOₓ (OR₁)_{y}]ₙ or Ti (acetyl -acetonate)₃, wherein:
R₁ has the meaning defined in Claim 1;
x is 0 or an integer, y is an integer of zero or more and 2x + y is the valence of the Ti; and
n is an integer of from 1 to 6 inclusive;
(3)a halogenated compound, capable of replacing at least one -OR₁ group in component (2) with a halogen atom, and capable of at least partially reducing the titanium of component (2) to the trivalent state; and
(4)an electron-donor compound containing one or more oxygen, silicon and/or phosphorus atoms, and comprising an ether or an organic or inorganic ester.

8. A process for preparing a catalyst component of the type defined in Claim 1, for use in the preparation of elastomeric copolymers of ethylene with alpha-olefins of formula R-CH=CH₂ wherein R is a C₁-C₆ alkyl, optionally with conjugated or non-conjugated dienes, which comprises reacting together
(I) a Ti compound, wherein the Ti is at least partially trivalent, containing Ti-OR₁ bonds, (wherein R₁ has the meaning defined in Claim 1);
(II) a complex of the formula:
MX₂.n(AIR"X₂).pAlX₃
wherein:
M is Ba, Ca, Mg or Mn;
X is chlorine or bromine;
R" is a C₁-C₂₀ hydrocarbyl radical;
n is a number from 1 to 4 inclusive;
p is 0 or 1; and
n + p is a number from 1 to 4 inclusive; and
(III) an electron-donor compound, containing one or more oxygen, silicon and/or phosphorus atoms and comprising an ether or an organic or inorganic ester.

## Patentansprüche

1. Verfahren zur Herstellung elastomerer Copolymere von Ethylen mit a-Olefinen der Formel R-CH=CH₂, worin R C₁-C₆-Alkyl darstellt, gegebenenfalls mit konjugierten oder nichtkonjugierten Dienen, umfassend Copolymerisieren der Monomere in Gegenwart einer katalytischen Menge eines Katalysators, umfassend:
(I) eine Katalysatorkomponente, umfassend:
(A) eine Magnesiumverbindung, die mindestens eine
Mg-Halogenbindung enthält;
(B) eine halogenierte Verbindung von Ti, die
Metall-Sauerstoff Ti-OR₁-Bindungen enthält (worin R₁ eine C₁-C₂₀-Alkyl-, Aryl- oder Cycloalkyl-Gruppe darstellt), worin das Ti mindestens teilweise dreiwertig ist; und
(C) eine Elektronendonor-Verbindung, die ein oder mehrere Sauerstoff-, Silicium- und/oder Phosphoratome enthält und die ein Ether oder ein organischer oder anorganischer Ester ist;
wobei das Atomverhältnis von Magnesium zu Titan 0,2:1 bis 50:1 ist; das Atomverhältnis von Halogen zu Titan mindestens 2:1 ist; das Atomverhältnis von Halogen zu Magnesium mindestens 2:1 ist; und das Verhältnis der Gruppen -OR₁ zu Titanatomen nicht größer als 1,5:1 ist; und
(II) eine Al-Alkyl-Verbindung.

2. Verfahren nach Anspruch 1, dadurch gekennzeichnet, daß das Atomverhältnis von Magnesium zu Titan mindestens 0,5:1 ist, das Atomverhältnis von Halogen zu Titan 4 bis 10 ist; das Atomverhältnis von Halogen zu Magnesium 4 bis 8 ist; und das Verhältnis der Gruppen -OR₁ zu Titanatomen nicht größer als 1:1 ist.

3. Verfahren nach Anspruch 1 oder Anspruch 2, dadurch gekennzeichnet, daß das Molverhältnis von Komponente (C) zu Magnesium 0,01:1 bis 10:1 ist.

4. Verfahren nach einem der vorangehenden Ansprüche, dadurch gekennzeichnet, daß die Magnesium-Verbindung ein wasserfreies Magnesiumhalogenid oder eine Verbindung der Formel XMgOR₁ darstellt, worin X Halogen oder eine Gruppe -R₁ oder -OR₁ darstellt, wobei R₁ die wie in Anspruch 1 definierte Bedeutung aufweist.

5. Verfahren nach Anspruch 4, dadurch gekennzeichnet, daß die Magnesium-Verbindung Magnesiumchlorid ist.

6. Verfahren zur Herstellung einer Katalysatorkomponente vom Typ (I), der in Anspruch 1 definiert ist, zur Verwendung bei der Herstellung von elastomeren Copolymeren von Ethylen mit α-Olefinen der Formel R-CH=CH₂, worin R ein C₁-C₆-Alkyl darstellt, gegebenenfalls mit konjugierten oder nichtkonjugierten Dienen, umfassend gemeinsames Umsetzen:
(1)eines wasserfreien Magnesiumhalogenids oder einer Verbindung der Formel XMgOR₁, worin X Halogen oder eine Gruppe -R₁ oder -OR₁ darstellt und R₁ die wie in Anspruch 1 definierte Bedeutung aufweist;
(2) einer Verbindung der Formel [TiOₓ(OR₁)_{y}]ₙ oder Ti(acetylacetonat)₃, worin:
R₁ die wie in Anspruch 1 definierte Bedeutung aufweist;
x 0 oder eine ganze Zahl ist, y eine ganze Zahl von 0 oder größer ist und 2x+y die Wertigkeit des Ti darstellt; und
n eine ganze Zahl von 1 bis einschließlich 6 ist;
(3) einer halogenierten Verbindung, in der Lage, mindestens eine Gruppe -OR₁ in Komponente (2) durch ein Halogenatom zu ersetzen;
(4) einer Elektronendonor-Verbindung, enthaltend ein oder mehrere Sauerstoff-, Silicium- und/oder Phosphoratome und umfassend einen Ether oder einen organischen oder anorganischen Ester; und
(5) einer reduzierenden Verbindung, in der Lage, mindestens teilweise das Titan von Komponente (2) zu dem dreiwertigen Zustand zu reduzieren.

7. Verfahren zur Herstellung einer Katalysatorkomponente vom Typ (I), der in Anspruch 1 definiert ist, zur Verwendung bei der Herstellung von elastomeren Copolymeren von Ethylen mit α-Olefinen der Formel R-CH=CH₂, worin R C₁-C₆-Alkyl darstellt, gegebenenfalls mit konjugierten oder nichtkonjugierten Dienen, umfassend gemeinsames Umsetzen:
(1)eines wasserfreien Magnesiumhalogenids oder einer Verbindung der Formel XMgOR₁, worin X Halogen oder eine Gruppe -R₁ oder -OR₁ darstellt und R₁ die wie in Anspruch 1 definierte Bedeutung aufweist;
(2) einer Verbindung der Formel [TiO_{X}(OR₁)_{y}]ₙ oder Ti(acetylacetonat)₃, worin:
R₁ die wie in Anspruch 1 definierte Bedeutung aufweist;
x 0 oder eine ganze Zahl ist, y eine ganze Zahl von 0 oder größer ist und 2x + y die Wertigkeit des Ti darstellt; und
n eine ganze Zahl von 1 bis einschließlich 6 ist;
(3) einer halogenierten Verbindung, in der Lage, mindestens eine Gruppe -OR₁ in Komponente (2) durch ein Halogenatom zu ersetzen und in der Lage, mindestens teilweise das Titan von Komponente (2) zu dem dreiwertigen Zustand zu reduzieren; und
(4) einer Elektronendonor-Verbindung, enthaltend ein oder mehrere Sauerstoff-, Silicium- und/oder Phosphoratome und umfassend einen Ether oder einen organischen oder anorganischen Ester.

8. Verfahren zur Herstellung einer Katalysatorkomponente vom Typ, der in Anspruch 1 definiert ist, zur Verwendung bei der Herstellung von elastomeren Copolymeren von Ethylen mit α-Olefinen der Formel R-CH=CH₂, worin R ein C₁-C₆-Alkyl darstellt, gegebenenfalls mit konjugierten oder nichtkonjugierten Dienen, umfassend gemeinsames Umsetzen
(I) einer Ti-Verbindung, worin Ti mindestens teilweise dreiwertig ist, enhaltend Ti-OR₁-Bindungen (worin R₁ die wie in Anspruch 1 definierte Bedeutung aufweist) ;
(II) eines Komplexes der Formel:
MX₂·n(AlR"X₂) ·pAlX₃
worin:
M Ba, Ca, Mg oder Mn darstellt;
X Chlor oder Brom darstellt;
R" einen C1-C20-Kohlenwasserstoffrest darstellt;
n eine Zahl von 1 bis einschließlich 4 ist;
p 0 oder 1 ist; und
n + p eine Zahl von 1 bis einschließlich 4 ist; und
(III) einer Elektronendonorverbindung, enthaltend ein oder mehrere Sauerstoff-, Silicium- und/oder Phosphoratome und umfassend einen Ether oder einen organischen oder anorganischen Ester.

## Revendications

1. Un procédé de préparation de copolymère élastomère d'éthylène avec des alpha-oléfines représentées par la formule:
R-CH=CH₂
dans laquelle:
R représente un radical alkyle en C₁ à C₆,
éventuellement avec des diènes conjugués ou non conjugués, qui comprend la copolymérisation desdits monomères en présence d'une quantité catalytique d'un catalyseur comprenant:
(I) un composant catalytique qui comprend:
(A) un dérivé de magnésium contenant au moins une liaison Mg-halogène;
(B) un dérivé halogéné de Ti contenant des liaisons métal-oxygène Ti-OR (dans lesquelles R représente un radical alkyle en C₁ à C₂₀, aryle ou un groupe cycloalkyle), dans lequel Ti est au moins partiellement trivalent; et
(C) un composé donneur d'électrons contenant un ou plusieurs atomes d'oxygène, de silicium et/ou de phosphore et qui correspond à un éther ou un ester organique ou inorganique;
le rapport atomique magnésium/titane étant de 0,2/1 à 50/1;
le rapport atomique halogène/titane étant d'au moins 2/1;
le rapport atomique halogène/magnésium étant d'au moins 2/1; et
le rapport des groupes -OR/atomes de titane n'est pas supérieur à 1,5/1; et
(II) un dérivé alkyl-Al.

2. Un procédé selon la revendication 1, caractérisé en ce que le rapport atomique magnésium/titane est d'au moins 0,5/1; le rapport atomique halogène/titane est de 4 à 10, le rapport atomique halogène/magnésium est de 4 à 8 et le rapport groupe -OR₁/atome de titane n'est pas supérieur à 1/1.

3. Un procédé selon la revendication 1 ou 2, caractérisé en ce que le rapport molaire composant (C)/magnésium est de 0,01/1 à 10/1.

4. Un procédé selon l'une quelconque des revendications précédentes, caractérisé en ce que le dérivé de magnésium est un halogénure de magnésium anhydre ou un dérivé représenté par la formule XMgOR₁, dans laquelle X est Un atome d'halogène ou un groupe -R₁ ou -OR₁, R₁ étant tel que défini dans la revendication 1.

5. Un procédé selon la revendication 4, caractérisé en ce que le dérivé de magnésium est le chlorure de magnésium.

6. Un procédé de préparation d'un composant catalytique de type (I) défini dans la revendication 1 pour une utilisation dans la préparation de copolymères élastomères d'éthylène avec des alpha-oléfines représentées par la formule:
^{R-CH=CH}2
dans laquelle:
R est un radical alkyle en C₁ à C₆,
éventuellement avec des diènes conjugués ou non conjugués, qui comprend la réaction de:
(1)un halogénure de magnésium anhydre ou un dérivé de formule:
XMgOR₁
dans laquelle:
X est un atome d'halogène ou un groupe -R₁ ou -OR₁, avec
(2) un composé de formule:
[TiOₓ (OR₁)_{y}]ₙ ou
Ti-(acétyl-acétonate)₃
dans laquelle:
R₁ est tel que défini dans la revendication 1;
x est égal à 0 ou représente un nombre entier;
y est un nombre entier supérieur ou égal à 0; et
2x + y correspond à la valence de Ti; et
n est un nombre entier de 1 à 6, bornes incluses;
(3) un dérivé halogéné capable de remplacer au moins un groupe -OR₁ dans le composant (2) par un atome d'halogène;
(4) un composé donneur d'électrons contenant un ou plusieurs atomes d'oxygène, de silicium et/ou de phosphore et comprenant un éther ou un ester organique ou inorganique; et
(5) un composé réducteur capable de réduire au moins partiellement le titane du composé (2) jusqu'à l'état trivalent.

7. Un procédé de préparation d'un composant catalytique du type (I) défini dans la revendication 1, pour une utilisation dans la préparation de copolymères élastomères d'éthylène avec des alpha-oléfines de formule R-CH=CH₂ dans laquelle R est un radical alkyle en C₁ à c₆, éventuellement avec des diènes conjugués ou non conjugués, qui comprend la réaction de:
(1)un halogénure d'aluminium anhydre ou d'un composé représenté par la formule:
XMgOR₁
dans laquelle:
X est un atome d'halogène ou un groupe -R₁ ou -OR₁, dans lesquels R₁ est tel que défini dans la revendication 1, avec
(2) un composé représenté par la formule:
[TiOₓ(OR₁)_{y}]ₙ ou
Ti-(acétyl-acétonate)₃
dans laquelle:
R₁ est tel que défini dans la revendication 1;
x représente 0 ou un nombre entier;
y est un nombre entier supérieur ou égal à 0; et
2x + y correspond à la valence de Ti; et
n est un nombre entier de 1 à 6, bornes incluses;
(3) un dérivé halogéné capable de remplacer au moins un groupe -OR₁ présent dans le composant (2) par un atome d'halogène et capable de réduire au moins partiellement le titane du composé (2) à l'état trivalent; et
(4)un composé donneur d'électrons contenant un ou plusieurs atomes d'oxygène, de silicium et/ou de phosphore et comprenant un éther ou un ester organique ou inorganique.

8. Un procédé de préparation d'un composant catalytique tel que défini dans la revendication 1 pour une utilisation dans la préparation de copolymères élastomères d'éthylène avec des alpha-oléfines, représenté par la formule R-CH=CH₂ dans laquelle R est un radical alkyle en C₁ à C₆, éventuellement avec des diènes conjugués ou non conjugués, qui comprend la réaction des composés suivants:
(I) un dérivé de Ti, dans lequel Ti est au moins partiellement trivalent, contenant des liaisons Ti-OR₁ (dans lesquels R₁ est tel que défini dans la revendication 1);
(II) un complexe représenté par la formule:
MX₂.n(AlR"X₂) .pAlX₃
dans laquelle:
M représente Ba, Ca, Mg ou Mn;
X est un atome de chlore ou de brome;
R" est un radical hydrocarbyle en C₁-C₂₀;
n est un nombre de 1 à 4, bornes incluses;
p est égal à 0 ou 1; et
n + p est un nombre compris entre 1 et 4, bornes incluses; et
(III) un composé donneur d'électrons contenant un ou plusieurs atomes d'oxygène, de silicium et/ou de phosphore et comprenant un éther ou un ester organique ou inorganique.
